# EUROPÄISCHE PATENTSCHRIFT

(11) **EP 2 994 646 B1**
(45) Veröffentlichungstag und Bekanntmachung des Hinweises auf die Patenterteilung: **18.04.2018**
(21) Anmeldenummer: 14720120.6
(22) Anmeldetag: 28.04.2014
(51) Int. Cl.: F04D 25/16

(54) **GETRIEBE UND GETRIEBEVERDICHTERANLAGE**
TRANSMISSION AND COMPRESSOR SYSTEM FOR A TRANSMISSION
TRANSMISSION ET INSTALLATION DE COMPRESSEUR À TRANSMISSION

(30) Priorität: 08.05.2013 DE 102013208564
(43) Veröffentlichungstag der Anmeldung: 16.03.2016
(73) Patentinhaber: Voith Patent GmbH, 89522 Heidenheim (DE)
(72) Erfinder: KEMPTER, Ulrich, 87545 Burgberg (DE); KUNZE, Jens, 87541 Bad Hindelang (DE); HORN, Thomas, 87509 Immenstadt (DE); SCHMID, Michael, 87538 Fischen (DE)
(86) Internationale Anmeldenummer: PCT/EP2014/058559
(87) Internationale Veröffentlichungsnummer: WO 2014/180688

(56) Entgegenhaltungen:
- EP-A2- 1 691 081
- WO-A1-2013/021664

## Beschreibung

Die Erfindung betrifft ein Getriebe, insbesondere Integralgetriebe im Einzelnen mit den Merkmalen aus dem Oberbegriff von Anspruch 1. Die Erfindung betrifft ferner eine Getriebeverdichteranlage.

Getriebe, insbesondere Integralgetriebe sind in einer Vielzahl von Ausführungen bekannt.

Diese sind Bestandteil von Maschinensträngen zum Antrieb von Kompressoren. Stellvertretend wird auf nachfolgend genannte Druckschriften verwiesen:
EP 2 128 448 A2
EP0 0440 902 A1
EP 0602 491 B1
WO 2013/021664 A1

Derartige Getriebe sind im Allgemeinen durch ein mit einem Antriebsaggregat in Form eines Elektromotors oder einer Turbine verbundene Antriebswelle charakterisiert, welche ein schrägverzahntes Antriebszahnrad trägt, das mit zwei oder mehreren Abtriebszahnrädern wenigstens mittelbar in Eingriff steht. Die Abtriebszahnräder sind drehfest mit Abtriebswellen verbunden oder integral mit diesen ausgeführt, welche mit den Laufrädern der Verdichter drehfest verbunden sind.

Aus EP1691081B1 ist eine Ausführung vorbekannt, bei welcher das Antriebszahnrad als Zwischenrad zwischen einem Abtriebszahnrad und einem als Großrad bezeichneten Zahnrad angeordnet ist. Über das Großrad erfolgt eine Übersetzung ins Langsame. Neben einer erheblichen Baubreite erfordern die auf das Antriebszahnrad wirkenden Lasten eine entsprechende Auslegung, insbesondere im Hinblick auf die Verzahnung und die Lagerung.

Demgegenüber offenbart die WO2013/021664 A1 eine Getriebeverdichterausführung mit in einer Anordnungsebene angeordneten An- und Abtriebsritzeln und jeweils einem zwischen An- und Abtriebsritzel angeordneten Zwischenrad, welches in vertikaler Richtung unterhalb der Anordnungsebene angeordnet ist. Die sich daraus ergebende Gehäusekonfiguration ist entweder beim Einsatz von Steckritzeln relativ komplex und sehr hohen Genauigkeitsanforderungen unterworfen oder durch einen Aufbau aus Teilgehäusen mit relativ kleinen Teilfugenabständen in vertikaler Richtung, insbesondere zwischen der Teilfuge zur Lagerung der Zwischenräder und der Teilfuge zur Lagerung der Ritzelwellen charakterisiert. Die Abstützung der mit den Abtriebsritzelwellen gekoppelten Aggregate, insbesondere Verdichter erfolgt daher nicht direkt sondern über das die Abtriebsritzelwellen tragende obere Gehäuseteil. Bei einer erforderlichen Demontage der Zwischenräder oder selbst beim Austausch der Lagerung dieser ist es zwingend erforderlich, die Verdichter und die einzelnen Ritzelwellen sowie den diese abstützenden Gehäuseteil zu demontieren, was sehr aufwändig ist. Des Weiteren bedingt eine gewünschte Änderung der Übersetzung zwischen den An- und Abtriebsritzeln eine vollständige Neuauslegung aller Gehäuseteile.

Der Erfindung liegt daher die Aufgabe zugrunde, ein Getriebe, insbesondere Integralgetriebe der eingangs genannten Art derart weiterzuentwickeln, dass dieses neben einer geringen Baugröße durch eine optimierte Lasteinleitung und eine einfache Gehäusekonfiguration charakterisiert ist, die eine Demontage der mit den Abtriebsritzelwellen gekoppelten Aggregate bei einem erforderlichen Austausch aller anderen Zahnrad tragenden Wellen und der Lagerungen dieser nicht erfordert.

Die erfindungsgemäße Lösung wird durch die Merkmale der Ansprüche 1 und 5 charakterisiert. Vorteilhafte Ausgestaltungen sind in den Unteransprüchen beschrieben.

Ein Getriebe, insbesondere Integralgetriebe mit einem drehfest mit einer Antriebswelle verbundenen Antriebszahnrad, mit einem mit dem Antriebszahnrad in Eingriff stehenden und als Großrad bezeichneten weiteren Zahnrad, mit einem dem Großrad in Eingriff stehenden ersten Abtriebszahnrad, wobei die Drehachsen des Antriebszahnrades und eines mit dem Großrad in Eingriff stehenden ersten Abtriebszahnrades in einer Anordnungsebene angeordnet sind, ist dadurch gekennzeichnet, dass die Drehachse des Großrades gegenüber der Anordnungsebene von Antriebszahnrad und erstem Abtriebszahnrad in vertikaler Richtung versetzt, oberhalb der Anordnungsebene (E), angeordnet ist.

Unter einem Integralgetriebe wird dabei ein Getriebe verstanden, welches in Kompressor- und/oder Expanderanlagen zum Einsatz gelangt.

Die einzelnen An- und Abtriebswellen sind parallel zueinander angeordnet. Die versetzte Anordnung erlaubt durch die Verschiebung des Großrades in vertikaler Richtung einen Eingriff des Antriebszahnrades und eines Abtriebszahnrades in einem Außenumfangsbereich, der in Erstreckungsrichtung des Getriebes senkrecht zu den Drehachsen der einzelnen Zahnräder betrachtet durch eine geringere Breite als der Durchmesser des Großrades charakterisiert ist. Die Erstreckung des Getriebes in dieser Richtung wird dadurch erheblich verkürzt. Ferner bietet die versetzte Anordnung des Großrades den Vorteil einer besseren Kompensation von Querkräften und damit Optimierung der Lastverteilung innerhalb des Getriebes, was sich in einer Erhöhung der Lebensdauer der Getriebekomponenten, insbesondere Lagerung niederschlägt. Gemäß der Erfindung ist zumindest ein weiteres Abtriebszahnrad vorgesehen, welches mit dem Antriebszahnrad in Eingriff steht, wobei die Drehachse des weiteren Abtriebszahnrades in der Anordnungsebene von Antriebszahnrad und erstem Abtriebszahnrad angeordnet ist. Diese Anordnung erlaubt eine einfache Montage von Antriebs- und Abtriebswellen im Bereich einer Trennfuge des Getriebegehäuses.

Zur Gewährleistung einer Anwendung in einer Getriebeverdichteranlage mit wenigstens zwei Verdichtern ist zumindest ein weiteres Abtriebszahnrad vorgesehen, welches mit dem Großrad in Eingriff steht, und dessen Drehachse gegenüber der Anordnungsebene von Antriebszahnrad und erstem Abtriebszahnrad versetzt angeordnet ist.

In vorteilhafter Ausbildung sind das Antriebszahnrad und/oder das erste und/oder die weiteren Abtriebszahnräder als Ritzel ausgeführt , die drehfest mit Ritzelwellen verbunden sind oder mit diesen eine integrale Baueinheit bilden. Der Bauteil- und Montageaufwand wird dadurch erheblich minimiert.

In Einbaulage betrachtet entspricht die Anordnungsebene vorzugsweise einer Horizontalebene.

Eine erfindungsgemäße Getriebeverdichteranlage weist ein Antriebsaggregat und eine Getriebebaueinheit gemäß einem der Ansprüche 1 bis 4 auf, wobei das Antriebsaggregat mit der Antriebswelle der Getriebebaueinheit verbunden ist und die erste Abtriebswelle mit einem Laufrad wenigstens einer ersten Verdichterstufe drehfest verbunden ist. In vorteilhafter Ausbildung ist die Getriebeverdichteranlage mit wenigstens zwei Verdichterstufen ausgeführt und die weitere Abtriebswelle des Getriebes ist mit wenigstens einem Laufrad einer weiteren Verdichterstufe drehfest verbunden.

Die erfindungsgemäße Lösung wird nachfolgend anhand von Figuren erläutert. Darin ist im Einzelnen folgendes dargestellt:

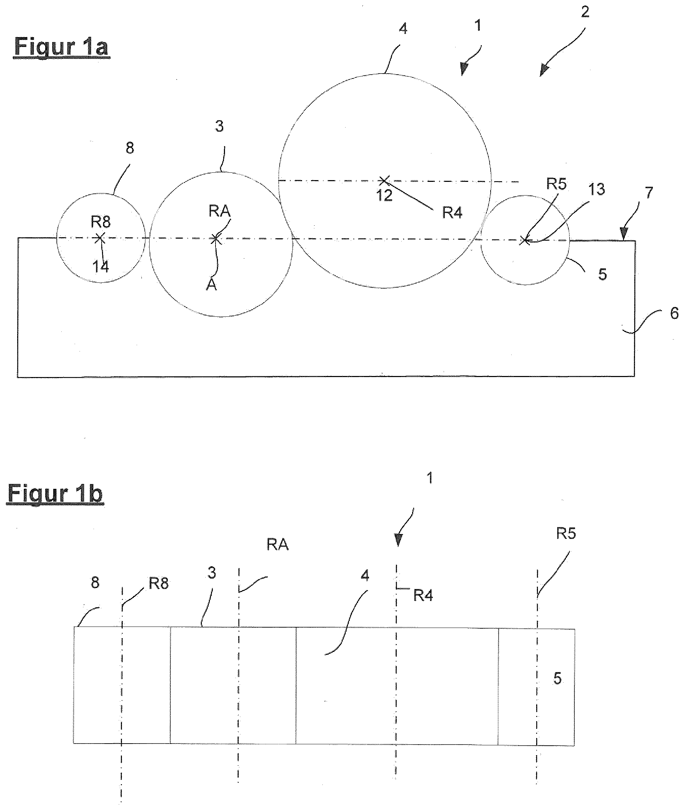

- Figur 1a: zeigt in schematisiert vereinfachter Darstellung den Grundaufbau eines integrierten Getriebes in einer Ansicht von vorn;
- Figur 1a: zeigt in schematisiert vereinfachter Darstellung den Grundaufbau eines integrierten Getriebes in einer Ansicht von oben;
- Figur 2a: zeigt beispielhaft ein Getriebe in einer Anwendung als Integralgetriebe in einer Getriebeverdichteranlage mit einem Antriebsaggregat in Form einer Turbine;
- Figur 2b: zeigt beispielhaft ein Getriebe in einer Anwendung als Integralgetriebe in einer Getriebeverdichteranlage mit einem Antriebsaggregat in Form einer elektrischen Maschine;
- Figur 2c: zeigt beispielhaft ein Getriebe in einer Anwendung als Integralgetriebe in einer Getriebeverdichteranlage gemäß Figur 2a mit zusätzlichem Elektromotor.

Die Figuren 1a und 1b zeigen in schematisiert vereinfachter Darstellung den Grundaufbau eines Getriebes 1, insbesondere Integralgetriebes für eine Getriebeturbomaschine 2 eines Maschinenstranges, insbesondere einer Getriebeverdichteranlage 10. Die Figur 1a zeigt die Anordnung der wesentlichen Getriebeelemente in einer Ansicht von vorn, die Figur 1b eine Ansicht von oben. Dieses umfasst ein drehfest mit einer Antriebswelle A verbundenes Antriebszahnrad 3, ein mit dem Antriebszahnrad 3 in Eingriff stehendes Großrad 4 und ein, mit dem Großrad 4 in Eingriff stehendes erstes Abtriebszahnrad 5. Das Antriebszahnrad 3 ist vorzugsweise mit der Antriebswelle A einteilig, d.h. integrale Baueinheit in Form einer Ritzel tragenden Welle ausgeführt. Die Drehachse der Antriebswelle A ist mit RA bezeichnet. Das Großrad 4 ist drehfest mit einer Welle verbunden oder integral mit dieser ausgeführt. Die das Großrad 4 tragende Welle ist mit 12 und die Drehachse mit R4 bezeichnet. In Analogie ist das Abtriebszahnrad 5 drehfest mit einer als Abtriebswelle 13 bezeichneten Welle verbunden oder als integrale Baueinheit ausgeführt. Die Drehachse ist mit R5 bezeichnet

Die Drehachsen RA des Antriebszahnrades 3 und R5 des mit dem Großrad 4 in Eingriff stehenden ersten Abtriebszahnrades 5 sind in einer Anordnungsebene E angeordnet. Die Wellen A und 13 können in einem Getriebegehäuse 6, von welchem hier nur der in Einbaulage untere Gehäuseteil angedeutet ist, in einer gemeinsamen Trennfuge 7 zwischen den Gehäuseteilen gelagert werden, wobei die Anordnungsebene E in Einbaulage von einer Horizontalebene gebildet wird. Erfindungsgemäß ist zur besseren Lastverteilung und Realisierung einer kompakteren Bauweise in axialer Richtung die Drehachse R4 des Großrades 4 gegenüber der Anordnungsebene E von Antriebszahnrad 3 und erstem Abtriebszahnrad 5 in vertikaler Richtung versetzt angeordnet. Dabei ist die das Großrad 4 tragende Welle 12 oberhalb der Anordnungsebene E angeordnet. Der Versatz erfolgt derart, dass der Winkel zwischen einer theoretisch gedachten Verbindungslinie zwischen Drehachse RA der Antriebswelle A und der Drehachse R4 des Großrades 4 sowie der Drehachse R4 des Großrades und der Drehachse R5 des ersten Abtriebszahnrades 5 in einem Bereich von 130° bis 175°ausgeführt ist. Erfindungsgemäß ist zumindest ein weiteres zweites Abtriebszahnrad 8 vorgesehen, welches mit dem Antriebszahnrad 3 in Eingriff steht, wobei die Drehachse R8 des weiteren Abtriebszahnrades 8 in der Anordnungsebene E von Antriebszahnrad 3 und erstem Abtriebszahnrad 5 angeordnet ist. Die einzelnen Abtriebszahnräder 5 und 8 sind ebenfalls jeweils mit Abtriebswellen 13, 14 drehfest verbunden, wobei die Verbindung entweder kraft- oder formschlüssig oder durch die einteilige Ausführung der Zahnräder als Ritzel mit den jeweiligen Wellen erfolgt , d.h. als integrale Baueinheit in Form einer Ritzel tragenden Welle.

Die Lagerung der Antriebswelle A, der das Großrad 4 tragenden Welle 12 und der einzelnen Abtriebswellen 13, 14 erfolgt im Gehäuse 6, wobei die Lagerungen vorzugsweise über ein gemeinsames Versorgungssystem 9 mit Schmiermittel versorgt werden.

Großrad 4 sowie die Zahnräder 3, 5, 8 sind schrägverzahnt. Durch die in vertikaler Richtung versetzte Anordnung des Großrades 4 ergibt sich eine optimale Lastverteilung.

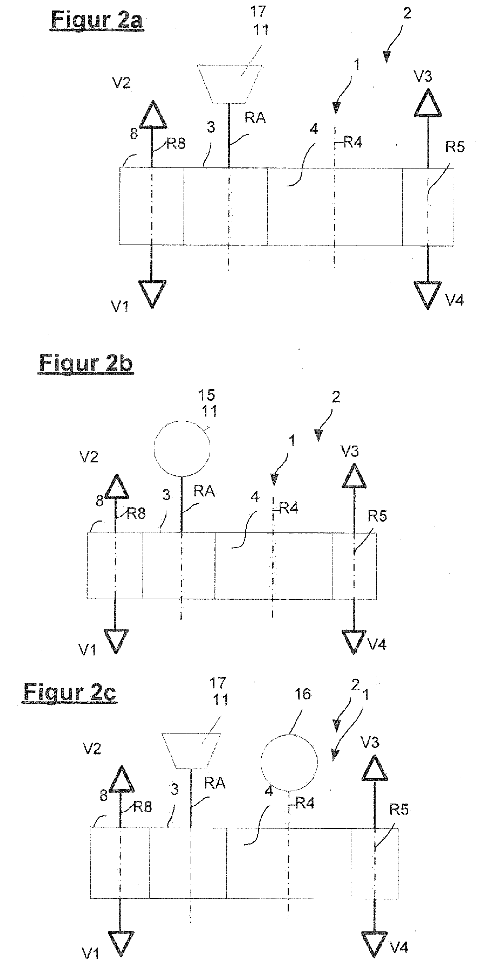

Figur 2a zeigt eine vorteilhafte Anwendung in einem Maschinenstrang einer Getriebeverdichteranlage 10 mit einer Antriebsmaschine 11, einem Getriebe 1 zum Antrieb zumindest eines oder mehrerer Verdichter V1 bis Vn, hier V1, V2, V3 und V4. Das Getriebe ist dabei wie in den Figuren 1a und 1b beschrieben ausgeführt. Die Antriebswelle A ist mit einem Antriebsaggregat 11 verbunden. Die einzelnen mit den Abtriebszahnrädern 5 und 8 verbundenen Abtriebswellen 13 und 14 sind jeweils mit einem Verdichter verbunden, insbesondere tragen sie ein Laufrad eines derartigen Verdichters V1 bis V4.

Die Antriebsmaschine gemäß Figur 2a ist als Turbine 17, insbesondere Dampfturbine ausgeführt. Demgegenüber zeigt Figur 2b eine Ausführung mit einer Antriebsmaschine in Form einer elektrischen Maschine 15.

Figur 2c zeigt eine Ausführung gemäß Figur 2a mit zusätzlicher elektrischer Maschine 16 am Großrad 4. Die elektrische Maschine 16 ist mit der Welle 12 des Großrades 4 gekoppelt.

### Bezugszeichenliste:

- 1: Getriebe, insbesondere Integralgetriebe
- 2: Maschinenstrang
- 3: Antriebszahnrad
- 4: Großrad
- 5: Abtriebszahnrad
- 6: Gehäuse
- 7: Trennfuge
- 8: Abtriebszahnrad
- 9: Versorgungssystem
- 10: Getriebeverdichteranlage
- 11: Antriebsaggregat
- 12: Welle
- 13: Abtriebswelle
- 14: Abtriebswelle
- 15: Elektromotor
- 16: Elektromotor
- 17: Turbine
- V1, V2: Verdichter
- A: Antriebswelle
- R3, R4, RA, R5, R8: Drehachse

## Patentansprüche

1. Getriebe (1), insbesondere Integralgetriebe
mit einem drehfest mit einer Antriebswelle (A) verbundenen Antriebszahnrad (3), mit einem mit dem Antriebszahnrad (3) in Eingriff stehenden Großrad (4), mit einem mit dem Großrad (4) in Eingriff stehenden ersten Abtriebszahnrad (5), wobei die Drehachsen (RA, R5) des Antriebszahnrades (3) und des mit dem Großrad (4) in Eingriff stehenden ersten Abtriebszahnrades (R5) in einer Anordnungsebene (E) angeordnet sind, die Anordnungsebene eine Horizontalebene ist und wobei zumindest ein weiteres Abtriebszahnrad (8) vorgesehen ist, welches mit dem Antriebszahnrad (3) in Eingriff steht, wobei die Drehachse (R8) des weiteren Abtriebszahnrades (8) in der Anordnungsebene (E) von Antriebszahnrad (3) und erstem Abtriebszahnrad (5) angeordnet ist,
**dadurch gekennzeichnet, dass** die Drehachse (R4) des Großrades (4) gegenüber der Anordnungsebene (E) von Antriebszahnrad (3) und erstem Abtriebszahnrad (5) in vertikaler Richtung versetzt angeordnet ist und, oberhalb der Anordnungsebene (E) angeordnet ist.

2. Getriebe (1) nach Anspruch 1,
**dadurch gekennzeichnet,**
**dass** zumindest ein weiteres Abtriebszahnrad vorgesehen ist, welches mit dem Großrad (4) in Eingriff steht, dessen Drehachse gegenüber der Anordnungsebene (E) von Antriebszahnrad (3) und erstem Abtriebszahnrad (5) versetzt angeordnet ist.

3. Getriebe (1) nach einem der Ansprüche 1 bis 2, **dadurch gekennzeichnet,**
**dass** das Antriebszahnrad (3) und/oder das erste und/oder die weiteren Abtriebszahnräder (5, 8) als Ritzel ausgeführt sind, die drehfest mit Ritzelwellen verbunden sind oder mit diesen eine integrale Baueinheit bilden.

4. Getriebe (1) nach einem der Ansprüche Anspruch 1 bis 3,
**dadurch gekennzeichnet,**
**dass** die Verzahnungen der einzelnen An- und Abtriebszahnräder (3, 5, 8) einfach schrägverzahnt ausgeführt sind.

5. Getriebeverdichteranlage (10) mit einem Antriebsaggregat (11) und einem Getriebe (1) gemäß einem der Ansprüche 1 bis 4, wobei das Antriebsaggregat (11) mit der Antriebswelle (A) der Getriebebaueinheit verbunden ist und die erste Abtriebswelle (13) mit mindestens einem Laufrad wenigstens einer ersten Verdichterstufe (V1) drehfest verbunden ist.

6. Getriebeverdichteranlage (10) nach Anspruch 5
**dadurch gekennzeichnet,**
**dass** die weitere Abtriebswelle (8) mit mindestens einem Laufrad einer weiteren Verdichterstufe (V2) drehfest verbunden ist.

## Claims

1. Gear unit (1), in particular integral gear unit, having a drive gearwheel (3) which is connected fixedly to a drive shaft (A) so as to rotate with it, having a bull gearwheel (4) which is in engagement with the drive gearwheel (3), having a first output gearwheel (5) which is in engagement with the bull gearwheel (4), the rotational axes (RA, R5) of the drive gearwheel (3) and of the first output gearwheel (R5) which is in engagement with the bull gearwheel (4) being arranged in an arrangement plane (E), the arrangement plane being a horizontal plane, and at least one further output gearwheel (8) being provided which is in engagement with the drive gearwheel (3), the rotational axis (R8) of the further output gearwheel (8) being arranged in the arrangement plane (E) of the drive gearwheel (3) and the first output gearwheel (5), **characterized in that** the rotational axis (R4) of the bull gearwheel (4) is arranged offset in the vertical direction with respect to the arrangement plane (E) of the drive gearwheel (3) and the first output gearwheel (5) and is arranged above the arrangement plane (E).

2. Gear unit (1) according to Claim 1, **characterized in that** at least one further output gearwheel is provided which is in engagement with the bull gearwheel (4), the rotational axis of which is arranged offset with respect to the arrangement plane (E) of the drive gearwheel (3) and the first output gearwheel (5).

3. Gear unit (1) according to either of Claims 1 and 2, **characterized in that** the drive gearwheel (3) and/or the first and/or the further output gearwheels (5, 8) are configured as pinions which are connected fixedly to pinion shafts so as to rotate with them, or form an integral structural unit with the said pinion shafts.

4. Gear unit (1) according to one of Claims 1 to 3, **characterized in that** the toothing systems of the individual drive and output gearwheels (3, 5, 8) are of single helically toothed configuration.

5. Geared compressor system (10) having a drive assembly (11) and a gear unit (1) according to one of Claims 1 to 4, the drive assembly (11) being connected to the drive shaft (A) of the gear unit module, and the first output shaft (13) being connected fixedly to at least one impeller of at least one first compressor stage (V1) so as to rotate with it.

6. Geared compressor system (10) according to Claim 5, **characterized in that** the further output shaft (8) is connected fixedly to at least one impeller of a further compressor stage (V2) so as to rotate with it.

## Revendications

1. Transmission (1), en particulier transmission intégrale comprenant une roue dentée d'entraînement (3) connectée de manière solidaire en rotation à un arbre d'entraînement (A), une grande roue (4) en prise avec la roue dentée d'entraînement (3), une première roue dentée de prise de force (5) en prise avec la grande roue (4), les axes de rotation (RA, R5) de la roue dentée d'entraînement (3) et de la première roue dentée de prise de force (R5) en prise avec la grande roue (4) étant disposés dans un plan d'agencement (E), le plan d'agencement étant un plan horizontal et au moins une roue dentée de prise de force supplémentaire (8) étant prévue, laquelle est en prise avec la roue dentée d'entraînement (3), l'axe de rotation (R8) de la roue dentée de prise de force supplémentaire (8) étant disposé dans le plan d'agencement (E) de la roue dentée d'entraînement (3) et de la première roue dentée de prise de force (5),
**caractérisée en ce que** l'axe de rotation (R4) de la grande roue (4) est disposé de manière décalée dans la direction verticale par rapport au plan d'agencement (E) de la roue dentée d'entraînement (3) et de la première roue dentée de prise de force (5) et est disposé au-dessus du plan d'agencement (E).

2. Transmission (1) selon la revendication 1,
**caractérisée en ce**
**qu'**au moins une roue dentée de prise de force supplémentaire est prévue, laquelle est en prise avec la grande roue (4), dont l'axe de rotation est disposé de manière décalée par rapport au plan d'agencement (E) de la roue dentée d'entraînement (3) et de la première roue dentée de prise de force (5).

3. Transmission (1) selon l'une quelconque des revendications 1 et 2,
**caractérisée en ce que**
la roue dentée d'entraînement (3) et/ou la première roue dentée de prise de force (5) et/ou les roues dentées de prise de force supplémentaires (8) sont réalisées sous forme de pignons qui sont connectés de manière solidaire en rotation à des arbres de pignon ou qui forment avec ceux-ci une unité structurelle intégrale.

4. Transmission (1) selon l'une quelconque des revendications 1 à 3,
**caractérisée en ce que**
les dentures des roues dentées d'entraînement et de prise de force (3, 5, 8) sont réalisées avec des dentures obliques simples.

5. Installation de compresseur de transmission (10) comprenant un groupe motopropulseur (11) et une transmission (1) selon l'une quelconque des revendications 1 à 4, le groupe motopropulseur (11) étant connecté à l'arbre d'entrée d'entraînement (A) de l'unité structurelle de transmission et le premier arbre de prise de force (13) étant connecté de manière solidaire en rotation à au moins un rotor d'au moins un premier étage de compresseur (V1).

6. Installation de compresseur de transmission (10) selon la revendication 5,
**caractérisée en ce que**
l'arbre de prise de force supplémentaire (8) est connecté de manière solidaire en rotation à au moins un rotor d'un étage de compresseur supplémentaire (V2).
